(19) **Europäisches Patentamt European Patent Office Office européen des brevets**

(11) **EP 2 587 296 B1**

(12) **EUROPEAN PATENT SPECIFICATION**

(45) Date of publication and mention of the grant of the patent:
**13.07.2016 Bulletin 2016/28**

(51) Int Cl.:
**G02B 21/24** *(2006.01)* **G02B 21/36** *(2006.01)*

(21) Application number: **12189444.8**

(22) Date of filing: **22.10.2012**

(54) **A method for digitizing images of a slide in an auto-immunity analysis**

Eine Methode zur Digitalisierung von Bildern eines Objektträgers zur Analyse der Autoimmunerkrankung

Procédé de numéritation d'images des lames de microscopes pour l'analysis de maladie auto-immune

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.10.2011 IT PI20110119**

(43) Date of publication of application:
**01.05.2013 Bulletin 2013/18**

(73) Proprietor: **VISIA Imaging S.r.l.**
**52027 San Giovanni Valdarno (AR) (IT)**

(72) Inventor: **Foggi, Alessandro**
**52027 San Giovanni Valdarno (AR) (IT)**

(74) Representative: **Turini, Laura et al**
**Studio Brevetti Turini Srl**
**Viale Matteotti, 25**
**50121 Firenze (FI) (IT)**

(56) References cited:
**EP-A1- 1 918 751  US-A1- 2004 105 000**
**US-A1- 2010 157 086  US-B1- 6 763 140**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

Technical field

The present invention relates to the technical field concerning the machinery, and related method, for carrying out autoimmunity tests.

In particular, the invention relates to an innovative machinery, and related method, that allows to digitize the images of the slide with a high resolution even in the case wherein there occur cases of poor reactivity and therefore of low light intensity emitted from the biological material being examined placed on the slide.

Background art

Machinery for the acquisition of images for checking of autoimmunity is now known for some time. The machinery consists of a camera connected to an optical unit and a reflecting mirror. Below the reflecting mirror is located a filter which filters certain light wavelengths. The filter is connected to a light source in the form of LEDs. Below the filter is located the microscope with a lens with a predetermined magnification, generally a 40x. The lens aims a slide to be analysed, which is located on a motorised table belonging to the microscope.

The slide is of the standard type with a predetermined number of pits in which is placed a different organic substrate depending on the type of test to be performed. The patient's serum is incubated in the pit with the substrate and the reaction that follows aims in revealing the presence, or absence, of the sought autoantibodies, according to the well-known indirect immunofluorescence technique (IIF).

The conformation of the slide is standard and has a predetermined number of pits arranged in one or two rows. The pits are physically obtained with a matrix in the form of adhesive sheet arranged on the slide and provided with holes that physically create the pits. A thin layer of biological substrate is then arranged on the slide to cover the pits in such a way that the reaction thereof can be then analysed once placed in contact with the patient's serum and a special reagent that causes a certain degree of fluorescence.

To this purpose, a first light beam is shot on the single pit at a certain wavelength (typically 480 Nanometres). The light invests the pit and causes a reaction of the reagent which produces a reflected light of variable intensity depending precisely on the reaction of autoimmunity produced.

The reflected light is acquired through the filter from the optical unit and by the camera through the appropriate reflection of the mirror.

The microscope acquires the images, pit per pit, at a magnification at 40X.

A technical problem concerns the fact that, since the system is automated, it is not easy focusing images at said magnification. Focusing depends on the distance along the vertical axis Z between the pit and the lens that acquires the image. At said magnifications, a variation of a few microns is sufficient to cause an image acquisition completely dark or blurry.

In particular, the problem becomes even more evident where the reactivity of the substrate invested by the light is minimal. In this case, emission of reflected light that is acquired by the camera is so low, that an image out of focus, causes obtaining a completely dark image.

An image is therefore stored which is really far from the real image that the operator would see by operating on a normal manual microscope and performing manually his focusing corrections.

In the current state of the art, methods for solving this technical problem are known which, however, are based on a chemical procedure of preparation of the specimen rather complex and that envisage the application of further reagent substances. It is evident how this method, to be implemented manually, not only causes a large expenditure of time but, moreover, increases considerably the costs, since it requires buying a further large quantity of chemical reagents.

Disclosure of invention

Object of the present invention is therefore to provide a new method, and related machinery, for an analysis of autoimmunity that solves at least in part the aforesaid drawbacks.

In particular, object of the present invention is to provide an innovative method for an analysis of a slide for autoimmunity which, in an automatic manner, allows carrying out proper focusing at a predetermined magnification of image acquisition, without therefore having to request the further application of reagents of a chemical nature.

Object of the present invention is also to provide an innovative method for an analysis of a slide for autoimmunity which allows to acquire sharp and clear images even in case of low reactivity of the substrate.

Object of the present invention is furthermore to provide an innovative method for an analysis of a slide for autoimmunity which allows focusing of the images in the order of a few seconds to minimise as much as possible exposure of the substrate to reagent light that causes the decay thereof.

These and other objects are therefore obtained with the present method for focusing an image of a slide (1, 1') with one or more pits (10) in a fluorescent test for autoimmunity according to Claim 1.

The method is implemented through an optical microscope (30) provided with at least two lenses (41) to acquire images at two different magnifications and a movable table on which is located the slide.

According to the method are provided the operations of:

- Selection of a lens at a first magnification (B.I.) and determination of a first focus distance (Z-foc-BI) with this first magnification (B.I.) for at least one pit (10, 10') of the slide (1, 1').

This operation comprises the acquisition (through the microscope camera) and the focus analysis at different distances (Z) of images acquired at a predetermined point of the matrix of the slide located outside the pit and preferably at the same level of the pit under examination.

The matrix is the material outside the pit and the image is acquired therefore at the level of the pit portion, that is at a point spaced from the pit (for example by a distance equivalent to the diameter of the pit) and which is indicatively comprised between two axes tangent to the pit, mutually parallel and parallel to the base of the slide. The calculation of focusing on a same level of the pit allows approximating better the actual value that could be obtained in the pit.

This preliminary technique is possible since the matrix has anyhow a constant brightness and not influenced by the luminescent reactivity of the reagent.

Subsequently, it is envisaged the subdivision of the pit under examination in a plurality of points (200', 200) defining an acquisition path of images and the selection of a second magnification (A.I.) greater than the first magnification (B.I.).

At this point, for each point (200', 200) of the path, there occurs the determination of a punctual focus distance (Z-foc-punt) to said second magnification (A.I.). This operation is implemented through the acquisition at different distances (Z) and the analysis of images acquired in the point (200', 200) with a gain value (G) of the camera and aperture time (T) such that said images resulting into all having a predetermined constant value of light intensity (I).

In this way, are sought focus distances for each point of the path by working on sharp images, since the latter have been acquired at a constant optimum value of I, that is, 70.

For each point of the path, I will have determined therefore a focus distance through which to acquire an image at the optimal value of G and T such that the brightness is that of reference 70.

In this way, substantially, all the parameters to obtain sharp images for each point on the path will become available.

At this point, it is proceeded to calculate an optimal focus for each pit (Z-foc-AI), for example through a bilinear interpolation of the calculated punctual focus distances (Z-foc-punt).

In particular, for the purpose of reducing to the maximum the calculation of the machine times, the first focus distance (Z-foc-BI) at low magnification is used as a starting level (Z) for the determination of the punctual focus distance (Z-foc-punt) at a point of the path (200', 200), particularly on the first point of the path starting from the bottom.

Further advantages are inferable from the dependent claims.

Brief description of the drawings

Further characteristics and the advantages of the present invention will become clearer with the description that follows of some embodiments, made by way of example and not limitative, with reference to the annexed drawings, wherein:

- Figure 1 shows a slide with a double row of pits and a slide with a single row of pits and identifies for both points Po..Pn at the matrix outside of the pits and substantially at the same level of the pits;
- Figure 2 shows an incremental variation $\Delta$ of distances Z of the lens at the point under examination in the slide and the related graph, which shows, for each incremental change, a point on the graph that shows the trend of the focus (graph of "quality of focus with respect to level Z, defined in the present description by the term focus analysis);
- Figure 3 shows a graph that implements through a straight line the foci of the pits comprised among the focus of the first and the last pit at a first magnification;
- Figure 4 shows an electronic microscope according to the present invention;
- Figure 5 shows the subdivision of a slide pit for the acquisition of images according to the "mosaicing" technique;
- Figures 6 and 7 show a phase of focusing at a second magnification greater than the first;

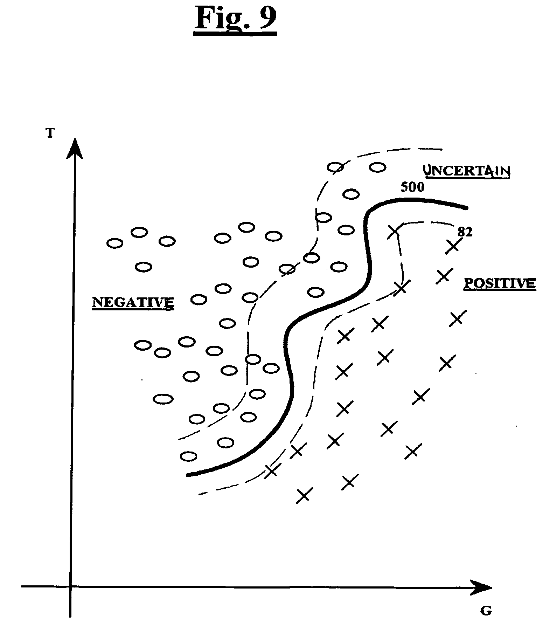

- Figures 8 and 9 implement graphs for the analytical calculation of the value of positivity to the test.

Description of some preferred embodiments

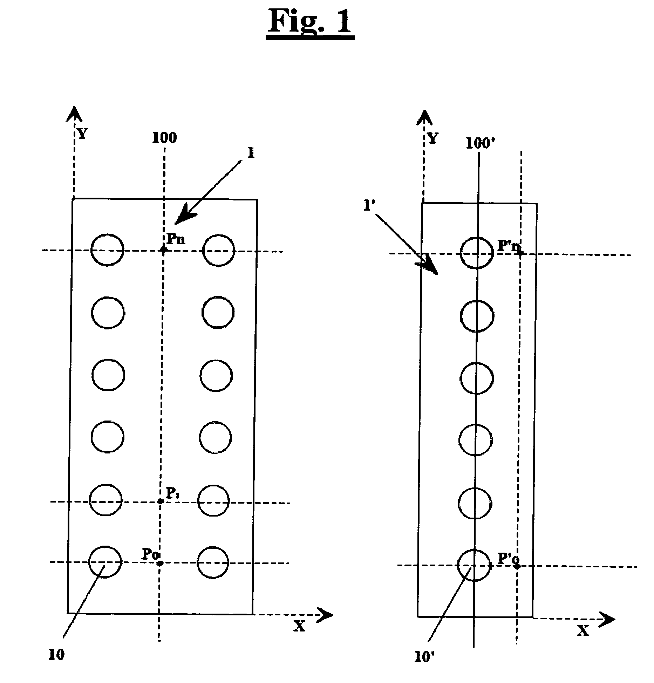

Figure 1 shows two examples of slide and one of which (slide 1) with two parallel rows of pits 10, while slide 1' has a single row of pits 10'.

These slides are absolutely standard and given here in a non-limiting manner.

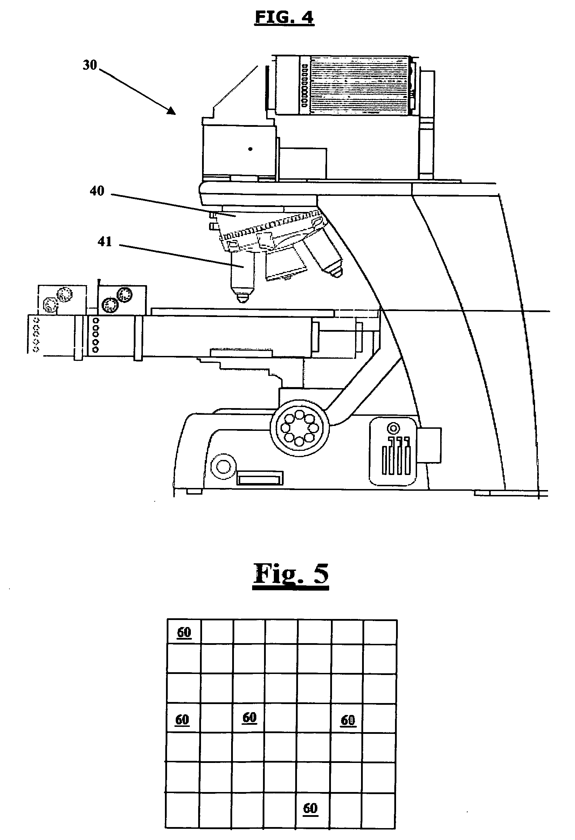

According to the method, it is proceeded to a first preliminary focusing at a first magnification, generally, but not necessarily, at a magnification in the order at 4x. For this purpose, the electronic microscope 30, represented schematically in Figure 4 in side view, rotates the lens-holding head 40 to prepare the aforesaid lens 41 at a 4X magnification in correspondence of the slide located on the movable table.

As per the prior art, the optical microscope is naturally provided with a camera for the acquisition of the images.

Referring to Figure 1, a first image is acquired within the matrix area, that is in a predetermined space of the mask interposed between two pits 10 arranged side by side between them. In particular, as shown in Figure 1, a first acquisition is carried out on the symmetry axis 100 of the slide at the level of the first pit 10 starting from the bottom (that is, that closest to the origin of reference X, Y shown in the Figure). The point at which the acquisition is made at said first magnification is indicated in the Figure by Po.

In the case of a slide with a single row of pits, consideration is always given on the matrix by moving in direction X from the first pit in the bottom of a fixed amount, generally in the order of the diameter of the pit thereof, by determining a point P'o.

In both cases, it is proceeded to a focusing of said point to said first magnification and arranged outside of the pits within the matrix.

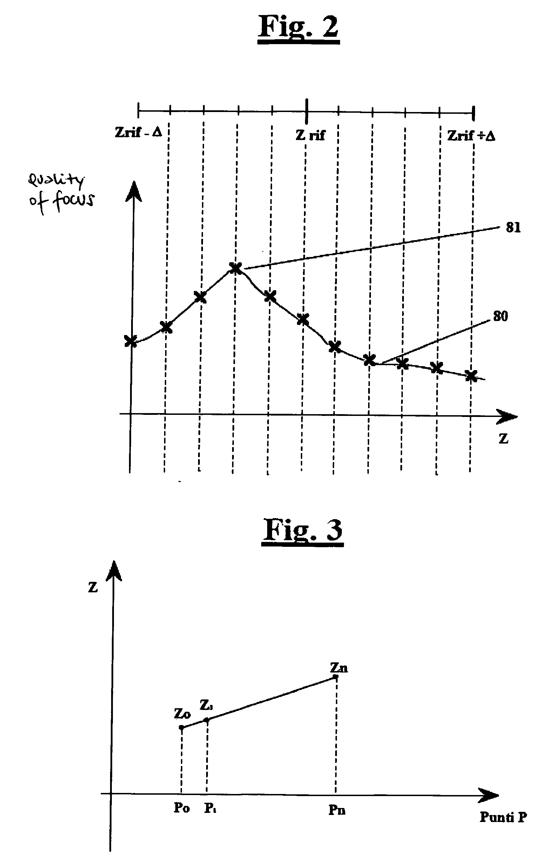

In detail, focusing at said first magnification envisages, as shown in Figure 2, the acquisition of an image (for the point under examination, for example Po) by starting from an initial reference level (Zrif).

The same operation is implemented by acquiring other images at various incremental distances (Δ) on the same point. In this way, as by Figure 2, a series of acquisitions is created within a range of distances Z.

The acquired images are analysed by a well-known formula given below, and which gives a sort of value on the quality of focus:

$$\nabla F = \frac{\partial F}{\partial x}\hat{i} + \frac{\partial F}{\partial y}\hat{j}$$

where $\partial F/\partial x$ represents the differences in the horizontal x direction and $\partial F/\partial y$ represents the differences in the vertical y direction.

Physically, therefore, the lens is approaching and moving away in steps by acquiring a plurality of images at various focus distances and, for each image, by making a focusing analysis of quality according to the formula given above. Figure 2 also shows on a Cartesian graph an interpolation of the curve 80 (relating, for example, to point Po), that shows the focusing values obtained at various distances. The curve has been represented by way of example with a maximum point 81 to a corresponding distance Z of the lens from the plane of the slide at the specific analysed point Po.

The starting level Z to initialise this focusing operation at a point P of the slide is obtained by focusing a white fibre arranged on the table and which is luminescent, as better clarified further down. This level is used as Zrif to be increased and decreased by delta (Δ), predetermined for each point.

The same procedure is repeated on a second point of the matrix and preferably, but not necessarily, at the last pit Zn (or Z'n, in case of a single row slide).

Alternatively, by starting from the first point Po at Zrif level, coincident with the focusing level of the fibre, the other Zrif of the successive points P1..Pn may safely use the optimal focus calculated in the preceding point.

In any case, in this manner, it will be obtained, therefore, a new focus distance Z for the first analysed point Pn, which may preferably be that extreme Pn with respect to the first point. By joining point Po with point Pn, preferably with a straight line, a linear path is obtained of foci Z associable to each pit (Po..Pn). The interpolation through a straight line is simple and gives a good approximation.

In particular, as shown in Figure 3, point Po will have a certain focus at a first magnification at 4X associated with the first pit, and so on up to point Pn to which corresponds focus distance Zn (only by way of example shown in Figure 3 as a greater distance with respect to the focus distance Zo).

It is important to note that this first part of preliminary focusing can be carried out in a standard way, that is simply by doing a quality analysis of focus through the formula given above, because the images are acquired on the matrix thereof and not in the pit. This causes the acquired image not to be affected by any chemical reaction of fluorescence and will always have a good brightness substantially constant which allows a relatively simple analysis of the focus.

In this manner, in a simple way, all the foci along the line 100 of the matrix to the first magnification at 4X are obtained.

It must be noted that, generally, the points have values of different foci precisely because these are related to variations in the order of microns due to imperfections of the surface layer of the slide thereof or of the table on which the latter is placed and which force the variation of the actual distances between the lens and the plane of the image acquisition.

In this way, as precisely shown in Figure 3, it is very likely obtaining two focus distances Zo and Zn relating to points Po and Pn, which are values generally different from each other.

At this point, it is proceeded with a second phase which is the real focusing of the pits at a second magnification greater than the first, that is at a magnification at 40X. In this case, as better clarified below, starting is from a level of initial image acquisition which is precisely that obtained in the previous step with said first magnification.

It must be noted that, in a non-trivial manner, the method hitherto described for a focus at 40x is not reproducible. This is because we are now going to acquire the images directly on the pits which are more or less visible depending on the reactivity of the reagent and therefore the emitted light. Therefore, if it is tried of focusing exactly as carried out in the previous step on the points placed in the matrix, the risk could occur for pits in which the substrate did not reacted by producing fluorescence not to acquire any image and therefore not make any focusing. It might even happen, with extremely dark images, to carry out a focus setting on a disturbance signal of the camera easily comparable to that of emission of brightness at low intensity.

For this purpose, as explained immediately below, the calculation of a first focus level at a first magnification at 4x for each pit (calculation made by acquiring the image on the matrix placed at the pit level), allows giving a focus starting point level for the real focus calculation at the second magnification.

This has an important technical effect. As in fact is well known, it is essential that focusing lasts as short a time as possible to avoid prolonged exposures of the substrate to light beams that cause the ruin and decay thereof, thus making the slide unusable. For this purpose, the focusing starting point at the first magnification can very well be used as a starting focus point for seeking focusing at the second magnification, thus allowing to considerably reducing the range of research and thereby considerably reducing the calculation "machine" times.

For this purpose, as shown in Figure 5, it is shown schematically the single pit which, as by prior art, it is acquired through a composition of various images 60 (said Tiles) each one of which depicts a portion of the pit. This mosaicised construction of the pit is well known and necessary, given the high magnification of acquisition.

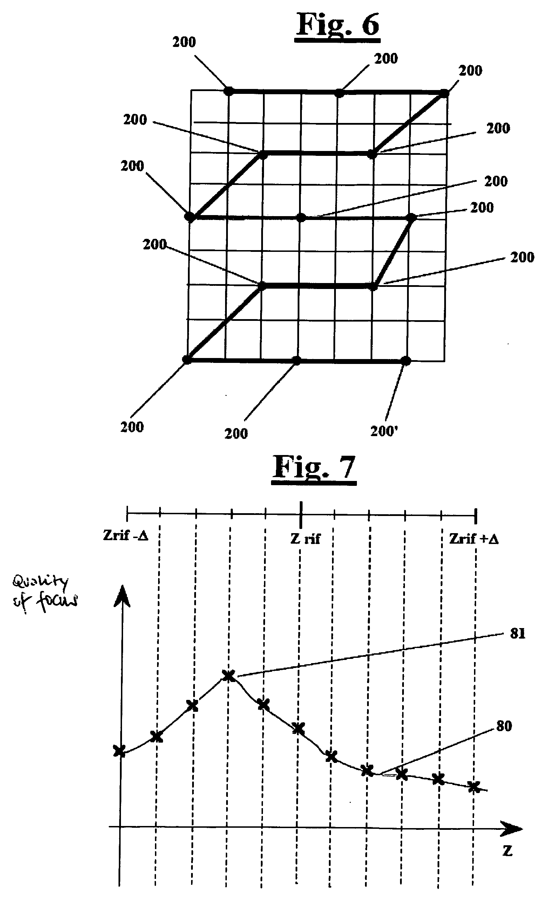

As, therefore, shown in Figure 6, before acquisition of the images with the technique of "mosaicing", it is proceeded with the definition of some sample points (200, 200'). These points are well known *a priori* in terms of coordinates (X, Y). It is in fact useful to remind once again that the slides are of standardised dimensions and shapes for which it is simple, for each pit, to define absolute coordinates of translation (X, Y) of the table on which is placed the slide and that allow to place the slide under the lens in any pre-selected point of a pit.

The zero starting reference of the table is obtained, generally, through the reflective white fibre located within the area of the table at a predetermined and known point. When the fibre is detected, with an image analysis, this constitutes the zero starting point for the calculation of all the movements given the various pits under the lens. In particular, being fixed the positions of the pits for each slide placed on the table, the distance between the fibre and a first pit starting reference is known. In this way, the software manages simply a movement of the table known once it has been identified the fibre and therefore by setting the starting zero at the level of the fibre. The other movements are usually implemented starting from said first identified pit.

As shown in Figure 6, the microscope has stored coordinates (Xi, Yi) which allow therefore to move the slide in such a way that, for each pit, the images are acquired at the points (200, 200') as indicated above and that define a broken line which runs more or less the entire area of the pit thereof.

The number of points constituting the broken line is variable depending on the scanning area, while the distance between contiguous points remains preferably constant (for example 13 points that form a double S).

The choice of the broken line made of points at a constant distance is advantageous because it implements easily and covers a homogeneous area of the pit. This is feasible, since the substrate has a homogeneous distribution in the pit.

However, nothing would prevent to draw lines and points different from those described, especially in the case of non-homogeneous substrate.

At this point, the process of focusing continuous on each pit by dividing the pit, in accordance with the indicated broken line.

Therefore, it is operated electronically by acting on the gain G of the camera and on the exposure time T thereof. Said parameters are typical of each camera. In particular, the gain "G" is the ability of being able to amplify and enhance an acquired image, then further define the contours, while the exposure time T is the time of aperture of the camera that determines the amount of light entering the lens.

A predetermined high value of gain G and a time T (G = 7,5, T = 40ms) is set to such an extent as to render well visible all the images, even the dark, which would not be visible because they are little reagent and therefore emitting little light.

In practice, the table, for each pit, moves to acquire the points (200', 200) of predetermined coordinates. Therefore, a self-adjustment through which it is acquired is carried out, for each above-mentioned predetermined point, an image to said gain G and exposure time T. Through the conversion formulas of T and G, the system calculates a new value of T and a new value of G optimal for each point, by introducing an intensity value I of known reference and set around 70. This constant value is a value of light image.

The formula used expresses the relation time exposure-Intensity, Gain-Intensity:

$$Texpn = Texpo*In/Io$$

$$Gn = Go*In/Io;$$

where Texpn is the exposure time of the camera to be calculated, Gn the camera gain to be calculated, Go is the maximum gain inserted and known also as Texpo is the maximum value of known T. I is the relative intensity of the region of acquired interest.

The value of image intensity I is a parameter known in the art of images and measure, a kind of image brightness.

In this way, in fact, by starting from a maximum value of G and T in which I acquire the image (Go and Texpo in the above-mentioned formula) we calculate with said formula an optimal value of G and T (Gn and Texpn) to acquire an image that has an optimal value of I preset to 70 (In) and that allows a sharp display image. It must be noted how the formula has a value of Io which is known only by the physical image acquisition at said values of Go and Texpo. From here, it is evident how the implementation of this formula requires the acquisition of the image for each point indicated above in Figure 6.

As a result, for each point (200, 200') of the broken line in the pit will be obtained an optimal value of G and T such that the acquired image is evident in a clear and uniform manner in the same way for each point, regardless of its real brightness due to the action of reagent of fluorescence.

Subsequently, each point (200, 200') must be focused starting from the image obtained with an exposure value T and gain G as calculated.

To do this, it is simply proceeded into implementing what has already been discussed schematically in Figure 2 and 3 in the case of low magnification since all the images are clearly visible in the same manner.

In particular, it is acquired, for each point (200', 200), a series of images at the specific value of G and T calculated in the point and at different distances Δ starting from an initial Zrif, to perform a focusing.

For the first point 200' of the broken line, the Zrif is that calculated in the point at 4X for the pit under examination (that is, at the first low magnification).

Figure 7 shows once again the focusing, entirely identical to that made for the low magnification, for example carried out on the first point 200' of a pit.

This point 200' has been acquired at various incremental distances Δ at the specific value thereof of G and T calculated in the previous step and the starting "Zrif" (from which it is moved away from said Δ) is that calculated at low magnification for the related pit.

Focusing is completed by carrying out the same calculation for all the points of the broken line and by taking for each point 200 as a starting level Zrif that which corresponds to focus Z calculated in the preceding point.

At this point are now known all distances Z, which allow perfect focusing at said second magnification for each point of the broken line and for images acquired in the point at the predetermined value of constant I (and therefore with the specific G and T calculated previously). At this point, it is sufficient to calculate a total focus as a function of all punctual foci, calculated, for example, through an algebraic mean, or a bilinear interpolation.

The advantage of carrying out an acquisition that starts from the last point at the bottom 200' to reach the first above, is that the camera is at once positioned on the end top of the pit for acquiring the first tile 60 and the subsequent to compose the desired image at a perfectly sharp focusing.

Once acquired the images these are then digitised and stored in the database. Displaying and browsing of the images is made sharp exactly how the physician would see an image on a manual microscope.

The machinery is also able to interpolate an automated calculation of the value of positivity.

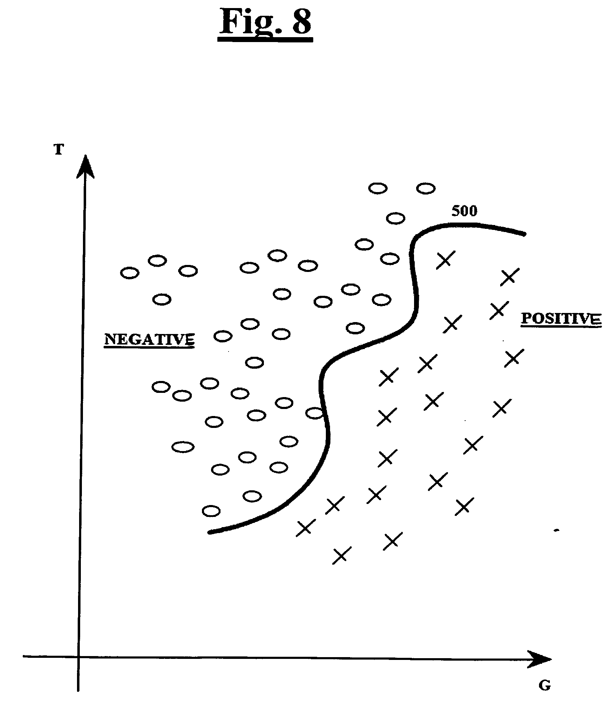

For this purpose, as shown in Figure 8, the software contains on a Cartesian axis (T, G) a line 500 which divides the area of positivity from that of negativity. The line is obtained by a training process in which are inserted a predetermined number of sample images of which, for each image are known the specific values of T and G, and the indication by the physician of the positivity or negativity of the sample.

In this way, it is created an area in which, on the one hand are placed those indicating a positive value of autoimmunity and, on the other hand, a negative value. At this point, the software is able to implement a line 500 so called "border line" that identifies a boundary between an area of positivity and of negativity. Line 500 is implemented through the well known SVM "Support Vector Machine".

Once obtained the line 500, the calculation is therefore easy on acquired images since the software simply will place the points on the basis of the previously calculated G and T and will check if these are on the positive or negative part.

However, borderline cases can exist wherein it is actually difficult to say whether the case is to be considered positive or negative and this typically occurs on the points close or slightly distant from the line of separation between the two areas.

For this purpose, it is possible to determine a Cut-Off value on the Probability of classification (of positivity or negativity) which delimits an upper limit 82 of an area of neg-uncertain that separates from an area of absolutely negative. When a point falls into the neg-uncertain, the software will indicate that this found value does not qualify neither as positive nor as negative.

The Cut-Off value is determined through checking of the positive samples classified with negative values and among these is chosen as the value of Probability classification that of lower positivity.

For example, if erroneously a point with a predetermined value of T and G is indicated as positive, but actually, it is very close to negativity, this value is stored as an uncertain. Among all, the lowest is acquired and is reduced by one point to determine a Cut-Off value.

If, for example, in the training phase there are three positive samples classified as negative with the following classification probabilities (13%, 25% and 11%), then the Cut-Off is chosen equal to 10%.

The neg-uncertain define therefore a kind of uncertainty area.

## Claims

1. A method for focusing an image of a slide (1, 1') provided with a matrix and one or more pits (10, 10') in a fluorescent test for autoimmunity through an optical microscope (30) provided with at least two lenses (41) and a camera to acquire images at two different magnifications and a movable table on which is placed the slide, the matrix being the material outside the pit, and comprising the operations of:

- Selection of a lens at a first magnification (B.I.) and determination of a first focus distance (Z-foc-BI) at said first magnification (B.I.) for at least one pit (10, 10') of the slide (1, 1'), said focusing operation comprising the acquisition of images at different incremental distances (Δ) at a point (Po) predetermined of the matrix of the slide located outside of the pit and the focus analysis of said acquired images;
- Subdivision of the pit under examination in a plurality of points (200', 200) defining an acquisition path of images;
- Selection of a lens at a second magnification (A.I.) greater than the first magnification (B.I.);
- For each point (200', 200) determination of a punctual focus distance (Z-foc-punt) at said second magnification (A.I.) through the acquisition at different incremental distances (Δ) of images in the point (200', 200) and the focus analysis of said acquired images, the images having been taken with a gain value (G) of the camera and aperture time (T) such that said images all have a predetermined value of light intensity (I) constant in the points (200', 200) and wherein, furthermore, the first focus distance (Z-foc-BI) at low magnification is used as starting level (Z) at which to carry out the acquisitions of images at different incremental distances for the determination of the punctual focus distance (Z-foc-punt) at a point, of the path (200', 200);
- Determination of a second focus distance (Z-foc-AI) of the pit to said second magnification (A.I.) as a function of the punctual focus distances (Z-foc-punt) calculated at each single point of the path.

2. A method, according to claim 1, wherein the point (Po, Pn) selected by the matrix for the determination of the first focus distance (Z-foc-BI) at the first magnification (B.I.) is at the same level of a pit under examination and wherein, furthermore, the path is defined on said corresponding pit.

3. A method, according to claim 1 or 2, wherein said first focus distance (Z-foc-BI) at low magnification is used as a starting level (Z) for the acquisitions at different incremental distances in the first point (200') of the path (200', 200).

4. A method, according to claim 3, wherein the starting level (Z) for the calculation of the punctual focus distance (Z-foc-punt) in the successive points of the path (200' 200) corresponds to the punctual focus level Z (Z-foc-punt) calculated in the previous point.

5. A method, according to one or more of the preceding claims from 1 to 4, wherein the determination of a first focus distance (Z-foc-BI) at said first magnification (B.I.) is carried out for all the pits of the slide.

6. A method, according to claim 5, wherein it is envisaged a calculation operation of a first focus distance (Z-foc-BI) in the first pit and in the last pit of the slide and wherein is provided a subsequent operation of interpolation of said two points for obtaining a line showing the values of (Z-foc-BI) for each pit comprised between the first and the last.

7. A method, according to claim 6, wherein the interpolation operation foreseen a straight line of junction between said first and last pit.

8. A method, according to claim 1, wherein the plurality of the points (200', 200) defining the path of acquisition of images at the second magnification (A.I.) are distributed in the pit in such a way as to form a broken line.

9. A method, according to one or more of the preceding claims from 1 to 8, wherein the plurality of the points (200', 200) are mutually spaced so as to be equidistant among them.

10. A method, according to claim 1, wherein the value of the gain (G) and the aperture time (T) of the camera at each point (200', 200) of the path are determined through the acquisition of an image at a preimposed value of (Go) and (To) to asses the corresponding light intensity (To) and implement a new evaluation of (Gn) and (Tn) such that the images acquired subsequently in the point all have a predetermined value of constant light intensity (In).

11. A method, according to claim 10, wherein the formula of implementation is the following:

$$Texpn = Texpo*In/Io$$

$$Gn = Go*In/Io;$$

with the following values:

- Go = 7,5;
- Texpo = 40ms;
- Io = 70.

**Patentansprüche**

1. Verfahren zur Fokussierung eines Bilds von einem Objektträger (1, 1'), der mit einer Matrize und einer oder mehreren Vertiefungen (10, 10') versehen ist, in einem fluoreszierenden Test für Autoimmunität durch ein optisches Mikroskop (30), das mit mindestens zwei Objektiven (41) und einer Kamera zur Erfassung von Bildern bei zwei verschiedenen Vergrößerungen und einem beweglichen Tisch, auf dem der Objektträger platziert ist, versehen ist, wobei die Matrize das Material außerhalb der Vertiefung ist, und das folgenden Vorgänge umfasst:

- Auswahl eines Objektivs bei einer ersten Vergrößerung (B.I.) und Bestimmung eines ersten Fokussierabstands (Z-foc-BI) bei der ersten Vergrößerung (B.I.) für zumindest eine Vertiefung (10, 10') des Objektträgers (1, 1'), wobei der Fokussiervorgang die Erfassung von Bildern bei verschiedenen inkrementellen Abständen ($\Delta$) an einem vorgegebenen Punkt (Po) der Matrize des Objektträgers außerhalb der Vertiefung gelegen und die Fokusanalyse der erfassten Bilder umfasst;
- Unterteilung der untersuchten Vertiefung in eine Vielzahl von Punkten (200', 200), die einen Erfassungsweg von Bildern definieren;
- Auswahl eines Objektivs bei einer zweiten Vergrößerung (A.I.) größer als die erste Vergrößerung (B.I.);
- Bestimmung eines punktuellen Fokussierabstands (Z-foc-punt) für jeden Punkt (200', 200) bei der zweiten Vergrößerung (A.I.) durch die Erfassung von Bildern bei verschiedenen inkrementellen Abständen ($\Delta$) in dem Punkt (200', 200) und die Fokusanalyse der erfassten Bilder, wobei die Bilder mit einem Verstärkungswert (G) der Kamera und einer Blendenzeit (T) dergestalt aufgenommen wurden, dass die Bilder alle einen vorgegebenen Wert der Lichtstärke (I) aufweisen, die in den Punkten (200', 200) konstant ist, und wobei darüber hinaus der erste Fokussierabstand (Z-foc-BI) bei geringer Vergrößerung als Ausgangsniveau (Z) verwendet wird, bei dem die Erfassungen von Bildern bei verschiedenen inkrementellen Abständen für die Bestimmung des punktuellen Fokussierabstands (Z-foc-Punt) an einem Punkt des Wegs (200', 200) durchzuführen ist;
- Bestimmung eines zweiten Fokussierabstands (Z-foc-AI) der Vertiefung zu der zweiten Vergrößerung (A.I.) als Funktion der an jedem einzelnen Punkt des Pfades berechneten punktuellen Fokussierabstände (Z-foc-Punt).

2. Verfahren nach Anspruch 1, wobei der durch die Matrize für die Bestimmung des ersten Fokussierabstands (Z-foc-BI) bei der ersten Vergrößerung (B.I.) ausgewählte Punkt (Po, Pn) auf der gleichen Ebene wie eine untersuchte Vertiefung ist, und wobei darüber hinaus der Weg auf der entsprechenden Vertiefung definiert ist.

3. Verfahren nach Anspruch 1 oder 2, wobei der erste Fokussierabstand (Z-foc-BI) bei niedriger Vergrößerung als ein Ausgangsniveau (Z) für die Erfassungen bei unterschiedlichen inkrementellen Abständen im ersten Punkt (200') des Wegs (200', 200) verwendet wird.

4. Verfahren nach Anspruch 3, wobei das Ausgangsniveau (Z) für die Berechnung des punktuellen Fokussierabstands (Z-foc-punt) in den nachfolgenden Punkten des Pfads (200', 200) dem im vorherigen Punkt berechneten punktuellen Fokussiemiveau Z (Z-foc-punt) entspricht.

5. Verfahren nach einem oder mehreren der vorhergehenden Ansprüche von 1 bis 4, wobei die Bestimmung eines ersten Fokussierabstands (Z-foc-BI) bei der ersten Vergrößerung (B.I.) für alle Vertiefungen des Objektträgers durchgeführt wird.

6. Verfahren nach Anspruch 5, wobei ein Berechnungsvorgang eines ersten Fokussierabstands (Z-foc-BI) in der ersten Vertiefung und in der letzten Vertiefung des Objektträgers vorgesehen ist, und wobei ein anschließender Vorgang der Interpolation der zwei Punkte für den Erhalt einer Linie bereitgestellt ist, die die Werte von (Z-foc-BI) für jede Vertiefung zwischen der ersten und der letzten zeigt.

7. Verfahren nach Anspruch 6, wobei der Interpolationsvorgang eine gerade Verbindungslinie zwischen der ersten und letzten Vertiefung vorsieht.

8. Verfahren nach Anspruch 1, wobei die Vielzahl der Punkte (200', 200), die den Weg der Erfassung von Bildern bei der zweiten Vergrößerung (A.I.) definieren, derart in der Vertiefung verteilt sind, dass sie eine gestrichelte Linie bilden.

9. Verfahren nach einem oder mehreren der vorhergehenden Ansprüche 1 bis 8, wobei die Vielzahl der Punkte (200', 200) gegenseitig beabstandet sind, um untereinander äquidistant zu sein.

10. Verfahren nach Anspruch 1, wobei der Wert der Verstärkung (G) und der Blendenzeit (T) der Kamera an jedem Punkt (200', 200) des Wegs durch die Erfassung eines Bildes bei einem vorab festgelegten Wert von (Go) und (To) vorgegeben ist, um die entsprechende Lichtstärke (Io) zu beurteilen und eine neue Bewertung von (Gn) und (Tn) umzusetzen, sodass die nachfolgend in dem Punkt erfassten Bilder alle einen vorgegebenen Wert von konstanter Lichtstärke (In) aufweisen.

11. Verfahren nach Anspruch 10, wobei die Formel der Umsetzung die folgende ist:

$$Texpn = Texpo*In/Io$$

$$Gn = Go*In/Io;$$

mit den folgenden Werten:

- Go = 7,5;
- Texpo = 40 ms;
- Io=70.

## Revendications

1.  Procédé conçu pour focaliser une image d'une diapositive (1, 1') dotée d'une matrice et d'un ou de plusieurs trous (10, 10') dans un test fluorescent d'auto-immunité à l'aide d'un microscope optique (30) équipé d'au moins deux lentilles (41) et d'une caméra pour obtenir des images à deux grossissements différents et une table mobile sur laquelle est placée la diapositive, la matrice étant le matériau se trouvant en dehors du trou, et comprenant les opérations de :

    - Sélection d'une lentille à un premier grossissement (B.I.) et détermination d'une première distance focale (Z-foc-BI) audit premier grossissement (B.I.) pour au moins un trou (10, 10') de la diapositive (1, 1'), ladite opération de mise au point comprenant l'acquisition d'images à différentes distances incrémentales ($\Delta$) à un point (Po) prédéterminé de la matrice de la diapositive placée en dehors du trou et l'analyse focale desdites images acquises ;
    - Subdivision du trou à l'examen dans plusieurs points (200', 200) définissant une voie d'acquisition d'images ;
    - Sélection d'une lentille à un second grossissement (A.I) supérieur au premier grossissement (B.I) ;
    - Pour chaque point (200', 200) détermination d'une distance focale ponctuelle (Z-foc-punt) à un dit second grossissement (A.I.) par l'acquisition à différentes distances incrémentales ($\Delta$) d'images dans le point (200', 200) et l'analyse focale desdites images acquises, les images ayant été prises avec une valeur de gain (G) de la caméra et du temps d'ouverture (T) de sorte que lesdites images ont toutes une valeur d'intensité lumineuse prédéterminée (I) constante dans les points (200', 200) et dans laquelle, en outre, la première distance focale (Z-foc-BI) à un faible grossissement est utilisée en tant que niveau de départ (Z) pour réaliser les acquisitions d'images à différentes distances incrémentales pour la détermination de la distance focale ponctuelle (Z-foc-punt) à un point de la voie (200', 200) ;
    - Détermination d'une seconde distance focale (Z-foc-AI) du trou audit second grossissement (A.I.) en tant que fonction des distances focales ponctuelles (Z-foc-punt) calculée à chaque point unique de la voie.

2.  Procédé, selon la revendication 1, dans lequel le point (Po, Pn) choisi par la matrice pour déterminer la première distance focale (Z-foc-BI) au premier grossissement (B.I.) est au même niveau qu'un point à l'examen et dans lequel, en outre, la voie est définie sur ledit trou correspondant.

3.  Procédé selon la revendication 1 ou 2, dans lequel ladite première distance focale (Z-foc-BI) à faible grossissement est utilisée en tant que niveau de départ (Z) pour les acquisitions à différentes distances incrémentales dans le premier point (200') de la voie (200', 200).

4.  Procédé selon la revendication 3, dans lequel le niveau de départ (Z) pour le calcul de la distance focale ponctuelle (Z-foc-punt) dans les points successifs de la voie (200', 200) correspond au niveau Z focal ponctuel (Z-foc-punt) calculé dans le point précédent.

5.  Procédé selon une ou plusieurs des revendications précédentes de 1 à 4, dans lequel la détermination d'une première distance focale (Z-foc-BI) audit premier grossissement (B.I.) est réalisée pour tous les trous de la diapositive.

6.  Procédé selon la revendication 5, dans lequel une opération de calcul d'une première distance focale (Z-foc-BI) est prévue dans le premier trou et dans le dernier trou de la diapositive et dans lequel une opération d'interpolation ultérieure desdits deux points est prévue afin d'obtenir une ligne présentant les valeurs de (Z-foc-BI) pour chaque trou compris entre le premier et le dernier.

7.  Procédé selon la revendication 6, dans lequel l'opération d'interpolation prévoit une ligne droite de jonction entre ledit premier et ledit dernier trou.

8.  Procédé selon la revendication 1, dans lequel plusieurs points (200', 200) définissant la voie d'acquisition des images au second grossissement (A.I.) sont répartis dans le trou de façon à former une ligne pointillée.

9.  Procédé, selon une ou plusieurs des revendications précédentes de 1 à 8, dans lequel plusieurs points (200', 200) sont mutuellement espacés de façon à être équidistants entre eux.

10. Procédé, selon la revendication 1, dans lequel la valeur du gain (G) et le temps d'ouverture (T) de la caméra à chaque point (200', 200) de la voie sont déterminés par l'acquisition d'une image à une valeur pré-imposée de (Go) et (To) pour évaluer l'intensité de lumière correspondante (Io) et mettre en oeuvre une nouvelle évaluation de (Gn) et (Tn) de sorte que les images acquises ultérieurement dans le point ont toutes une valeur d'intensité de lumière constante (In) prédéterminée.

11. Procédé, selon la revendication 10, dans lequel la formule de mise en oeuvre est la suivante :

```
Texpn = Texpo*In/Io

  Gn = Go*In/Io ;
```

avec les valeurs suivantes :

   - Go = 7,5 ;
   - Texpo = 40ms ;
   - Io = 70.

# Fig. 1

## Fig. 2

## Fig. 3

## FIG. 4

30

40

41

## Fig. 5

| 60 | | | | | | |
|----|----|----|----|----|----|----|
| | | | | | | |
| | | | | | | |
| 60 | | 60 | | | 60 | |
| | | | | | | |
| | | | | | | |
| | | | 60 | | | |

## Fig. 6

## Fig. 7

# Fig. 8

# Fig. 9